# EUROPEAN PATENT APPLICATION

(11) **EP 2 634 783 A1**
(43) Date of publication of application: **04.09.2013**
(21) Application number: 10858824.5
(22) Date of filing: 27.10.2010
(51) Int. Cl.: H01G 9/058, H01G 9/042, H01G 9/155

(54) **COMPOSITE ELECTRODE MATERIAL, MANUFACTURING METHOD AND APPLICATION THEREOF**

(71) Applicant: Ocean's King Lighting Science&Technology Co., Ltd., Guangdong 518054 (CN)
(72) Inventor: ZHOU, Mingjie, Shenzhen Guangdong 518054 (CN); YU, Zhaozhe, Shenzhen Guangdong 518054 (CN); WANG, Yaobing, Shenzhen Guangdong 518054 (CN)
(74) Representative: Noel, Chantal Odile
(86) International application number: PCT/CN2010/078142
(87) International publication number: WO 2012/055095

(57) **Abstract**

The invention relates to a composite electrode material, a manufacturing method and application thereof. The composite electrode material comprises manganese oxide, graphene and graphite oxide. The manufacturing method includes the following steps, first step: adequately milling graphene then ultrasonic dispersing it into water; second step: dissolving hypermanganate into the water containing graphene and obtaining the aqueous solution containing permanganate ion and graphene; third step: adding polyethylene glycol into the aqueous solution of second step under stirring and obtaining mixed solution; fourth step: stirring the mixed solution until fuchsia completely faded, then filtering, washing and drying precipitate and obtaining the composite electrode material. The composite electrode material has the following advantages: high specific surface area, high conductivity and high specific capacity, and can be applied to supercapacitor electrode material.

## Description

### Technical Field

The present invention relates to a composite electrode material, a method for preparing the same, and use of the same, in particular to a composite electrode material comprising manganese oxide, graphene and graphite oxide, a method for preparing the same, and use of the same as an electrode material for a supercapacitor.

### Background

Supercapacitors have drawn great attentions due to their advantages such as high energy density, high power density, long service life, environmental friendliness, etc. Supercapacitors have extremely important and broad application prospects in solar energy charger, alarm devices, household appliances, stand-by power for computers, and in the aerospace and defense science and technology, such as ignition devices for aircrafts, and have become a worldwide research hotspot.

In the research and development of supercapacitors, carbon materials with high specific surface areas, such as activated carbon, carbon aerogel, carbon nanotubes and carbon fibers, are ideal electrode materials for supercapacitors. Although carbon material supercapacitors have been initially applied commercially, the applications thereof are greatly limited due to their relatively low specific capacity. Accordingly, it is still needed to find new electrode materials for high-capacity, reliable supercapacitors. Electrochemical capacitors in which energy storage is achieved by employing Faraday pseudo capacitance produced through a redox reaction of a metal oxide has drawn great attentions from researchers. Ruthenium oxide, among other transition metal oxides, is an ideal material for supercapacitors, but its high cost hinders its industrialization. Nickel oxide and cobalt oxide have a disadvantage of narrow working potential window. Manganese oxide has advantages such as abundant resources, low prices, dual characteristics of electrical double-layer capacitor and pseudo capacitor, environmental friendliness, and possibility of being produced in large scale, and is considered to be an electrode material having great potential to be used for supercapacitors. Accordingly, manganese oxide has drawn broad attentions.

Graphene materials have drawn broad attentions due to their unique structures and optoelectronic properties. Monolayer graphite is considered to be an ideal material due to its large specific surface area, excellent electrical and thermal conductivities and low thermal expansion coefficient. For example, the properties of monolayer graphite include: 1, high strength: Young's molar amount (-1,100 GPa), breaking strength (-125 GPa); 2, high thermal conductivity (-5,000 W/mK); 3, high electrical conductivity: carrier transportation rate (200,000 cm²/V*s); and 4, high specific surface area (theoretically calculated value: 2,630 m²/g). Specifically, monolayer graphite has high electrical conductivity, large specific surface area and a two-dimensional nano-scale structure of a single molecular layer, and can be widely used in electrode materials.

Currently, the method for preparing manganese oxide electrode material may be mainly selected from: (1) solid phase method; (2) carbothermal reduction method; (3) sol-gel method; (4) hydrothermal method; (5) co-precipitation method; (6) microwave method, and the like. When this kind of electrode material is used in a supercapacitor, a problem of large resistance often occurs. In order to solve this problem, certain means is employed to incorporate a carbon material with a good conductivity into the electrode material, so as to improve the electrical conductivity of the electrode material and the performance of the supercapacitor.

### Summary

The technical problem to be solved by the present invention is to provide a composite electrode material with a high surface area, a high electrical conductivity and a high specific capacity, and a method for preparing the composite electrode material.

The technical solution to solve the technical problem of the present invention is to provide a composite electrode material, which comprises manganese oxide, graphene and graphite oxide.

The weight ratio of manganese oxide may be 49% ∼ 99%, the weight ratio of graphene may be 0.1% ∼ 50%, and the weight ratio of graphite oxide may be 0.01% ∼ 20%.

Further provided is a method for preparing a composite electrode material, which comprises the steps of:
Step 1: sufficiently grinding graphene, and dispersing it in water under ultrasonic wave;
Step 2: dissolving a permanganate salt in the graphene-containing water to prepare an aqueous solution containing permanganate ions and graphene;
Step 3: adding polyethylene glycol to the aqueous solution prepared in Step 2 under stirring to give a mixed solution; and
Step 4: stirring the mixed solution until fuchsia color completely fades, filtering, washing and drying the precipitate, to give a composite electrode material comprising manganese oxide, graphene and graphite oxide.

In the preparation method of the present invention, graphene may be an atomic-level graphene monomer, or an aggregate of graphite sheets consisting of 2-10 layers of atomic-level graphene monomer.

In Step 2 of the preparation method of the present invention, the molar concentration of the permanganate ions in the aqueous solution may be 0.08-0.12 mol/L.

In Step 3 of the preparation method of the present invention, polyethylene glycol may be at least one of PEG400, PEG2000 and PEG6000.

In Step 3 of the preparation method of the present invention, the volume ratio of polyethylene glycol and the mixed solution may be 3:40 ∼ 1:20.

In Step 4 of the preparation method of the present invention, the washing process may comprise washing with deionized water for 3∼5 times followed by washing with absolute ethanol for 1-3 times, and the temperature employed in the drying process may be 80 °C.

The present invention further provides use of a composite electrode material as an electrode material for a supercapacitor.

In the present invention, graphene uniformly dispersed in water is used as a templating agent or a nucleating agent, to which is added potassium permanganate, so that a part of graphene is oxidized to graphite oxide, which increases the dispersion uniformity of graphene in deionized water, and facilitates the production of composite material characterized in fine particulates and high specific surface area and consisting of manganese oxide, graphene and graphite oxide. Graphite oxide also has a high electrical conductivity. The composite electrode material of the present invention has the following advantages: 1, the electrode material of the present invention is mixed uniformly, and has a good stability; as the templating agent is a micrometer- and nanometer-scale monolayer graphene sheet combined with partially reduced graphite oxide, the composite degree is higher, and the exfoliation is less; 2, the composite electrode material of the present invention has a high electrical conductivity since graphene and graphite oxide each has a high electrical conductivity; and 3, due to the addition of graphene, the stability, the electrical conductivity and the specific capacity, especially the specific capacity under a high discharge current, of the composite electrode material of the present invention are significantly improved.

### Brief Description of the Figures

The present invention is further illustrated in combination with the Figures and the Examples, in which:
Figure 1 shows the SEM picture of the composite electrode material of the present invention prepared in Example 3;
Figure 2 shows the comparison of the charge-discharge capacity retention curves of the composite electrode materials of the present invention prepared in Examples 1-4, respectively, by adding different amounts of polyethylene glycol, wherein the curves A, B, C and D correspond to Examples 1-4, respectively;
Figure 3 shows the cyclic voltammetric curves of the composite electrode material of the present invention prepared in Example 3 under different scanning speeds; and
Figure 4 shows a flowchart of the method for preparing the composite electrode material of the present invention.

### Specific Embodiments

In order to make the objectives, the technical solutions and the advantages of the present invention more apparent, the present invention will be further illustrated hereinbelow in combination with the Figures and Examples. It should be understood that the specific Examples described herein are only intended to explain, not to limit, the present invention.

The present invention provides a composite electrode material, which comprises manganese oxide, graphene and graphite oxide.

The weight ratio of manganese oxide may be 49% ∼ 99%, the weight ratio of graphene may be 0.1% ∼ 50%, and the weight ratio of graphite oxide may be 0.01% ∼ 20%.

The present invention further provides use of a composite electrode material comprising manganese oxide, graphene and graphite oxide as an electrode material for a supercapacitor.

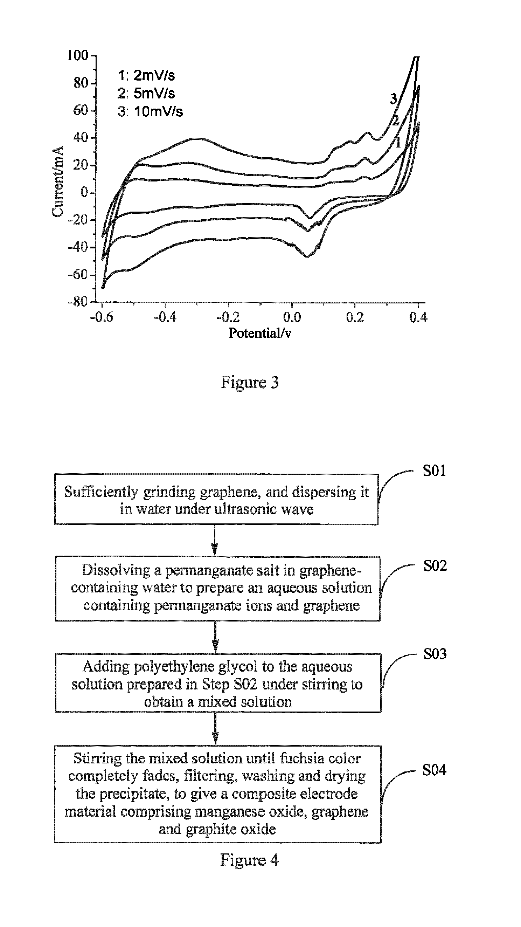

In the present invention, graphene uniformly dispersed in water is used as a templating agent or a nucleating agent, to which is added potassium permanganate, so that a part of graphene is oxidized to graphite oxide, which increases the dispersion uniformity of graphene in deionized water, and facilitates the production of composite material characterized in fme particulates and high specific surface area and consisting of manganese oxide, graphene and graphite oxide. Graphite oxide also has a high electrical conductivity. The composite electrode material of the present invention has the following advantages: 1, the electrode material of the present invention is mixed uniformly, and has a good stability; as the templating agent is a micrometer- and nanometer-scale monolayer graphene sheet combined with partially reduced graphite oxide, the composite degree is higher, and the exfoliation is less; 2, the composite electrode material of the present invention has a high electrical conductivity since graphene and graphite oxide each has a high electrical conductivity; and 3, due to the addition of graphene, the stability, the electrical conductivity and the specific capacity, especially the specific capacity under a high discharge current, of the composite electrode material of the present invention are significantly improved. Referring to Figure 4, which shows a flowchart of the method for preparing the composite electrode material of the present invention, the method comprises the steps of:
Step S01: sufficiently grinding graphene, and dispersing it in water under ultrasonic wave;
Step S02: dissolving a permanganate salt in the graphene-containing water to prepare an aqueous solution containing permanganate ions and graphene;
Step S03: adding polyethylene glycol to the aqueous solution prepared in Step S02 under stirring to give a mixed solution; and
Step S04: stirring the mixed solution until fuchsia color completely fades, filtering, washing and drying the precipitate, to give the composite electrode material comprising manganese oxide, graphene and graphite oxide.

In the preparation method of the present invention, graphene may be an atomic-level graphene monomer, or an aggregate of graphite sheets consisting of 2-10 layers of atomic-level graphene monomer.

In Step S02, the molar concentration of the permanganate ions in the aqueous solution may be 0.08-0.12 mol/L.

In Step S03, polyethylene glycol may be at least one of PEG400, PEG2000 and PEG6000.

In Step S03, the volume ratio of polyethylene glycol and the mixed solution may be 3:40 ∼ 1:20.

In Step S04, the washing process may comprise washing with deionized water for 3∼5 times followed by washing with absolute ethanol for 1-3 times, and the temperature employed in the drying process may be 80 °C.

The preparation method of the present invention is simple with a short process, has low dependence on the equipments, and may be one of the potential methods for preparing an electrode material for a supercapacitor in a large scale.

The aspects such as different compositions of the composite electrode material and processes for preparing the same are illustrated hereinbelow through several Examples.

### Example 1

(1) 0.1 gram (g) of graphene is weighed and dispersed in 80 ml of deionized water under ultrasonic wave.
(2) A certain amount of potassium permanganate (analytically pure) is weighed and dissolved in the graphene-containing deionized water prepared in step (1) to prepare a 0.1 mol/L solution.
(3) 2.5 ml of polyethylene glycol is added slowing to the solution prepared in step (2) under stirring to give a mixed solution.
(4) The mixed solution is stirred until fuchsia color completely fades, and the precipitate is washed with deionized water for several times, filtered, and washed with absolute ethanol.
(5) The material is dried in an oven at 80 °C for 4 hours (h) to give a black powder sample A, i.e. the composite electrode material.

The test of the electrochemical properties of the composite electrode material is as follows.

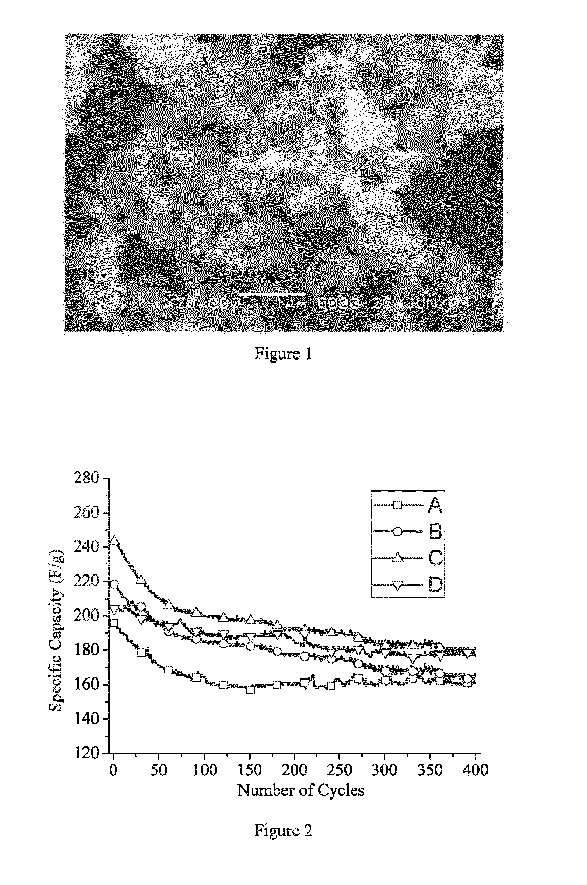

Manganese oxide powder and acetylene black and polytetrafluoroethylene (PTFE) are mixed uniformly in a ratio of 85:10:5 (wt%), applied on a 2 cm x 2 cm foamed nickel current collector, dried under 75 °C, and then pressed into an electrode under 10 MPa pressure. Two sheets of electrodes are prepared with the same method, assembled into a symmetric type supercapacitor which is subjected to a constant-current charge-discharge test at a current density of 200 mA/g. A cyclic voltammetric test is conducted using a three-electrode test system in which a platinum electrode is used as the auxiliary electrode and a saturated calomel electrode is used as the reference electrode. As the electrolyte, a 9 mol/L KOH solution is used. The test is conducted under room temperature (20 °C). As shown from the charge-discharge capacity retention curves in Figure 2, when the amount of the added polyethylene glycol is relatively low, the initial capacity of the composite electrode material comprising manganese oxide / graphene / graphite oxide (i.e., Sample A) for supercapacitor can reach 200 F/g. However, the specific capacity decreases rapidly: after 100 charge-discharge cycles, the specific capacity decreases to around 160 F/g. In the cycling process thereafter, the specific capacity remains substantially unchanged.

### Example 2

(1) 0.1 g of graphene is weighed and dispersed in 80 ml of deionized water under ultrasonic wave.
(2) A certain amount of analytically pure potassium permanganate is weighed and dissolved in the graphene-containing deionized water prepared in step (1) to prepare a 0.1 mol/L solution.
(3) 5 ml of polyethylene glycol is added slowing to the solution prepared in step (2) under stirring to give a mixed solution.
(4) The mixed solution is stirred until fuchsia color completely fades, and the precipitate is washed with deionized water for several times, filtered, and washed with absolute ethanol.
(5) The material is dried in an oven at 80 °C for 4 h to give a black powder sample B, i.e. the composite electrode material.

The test of the electrochemical properties of the composite electrode material of Example 2 is the same as that described in Example 1. As shown from the charge-discharge capacity retention curves in Figure 2, along with the increase in the amount of the added polyethylene glycol, the capacity of the composite electrode material comprising manganese oxide / graphene / graphite oxide (i.e., Sample B) for supercapacitor also increases. The initial capacity can reach 220 F/g. However, the specific capacity still decreases rapidly: after 400 charge-discharge cycles, the specific capacity decreases to around 160 F/g.

### Example 3

(1) 0.1 g of graphene is weighed and dispersed in 80 ml of deionized water under ultrasonic wave.
(2) A certain amount of analytically pure potassium permanganate is weighed and dissolved in the graphene-containing deionized water prepared in step (1) to prepare a 0.1 mol/L solution.
(3) 7.5 ml of polyethylene glycol is added slowing to the solution prepared in step (2) under stirring to give a mixed solution.
(4) The mixed solution is stirred until fuchsia color completely fades, and the precipitate is washed with deionized water for several times, filtered, and washed with absolute ethanol.
(5) The material is dried in an oven at 80 °C for 4 h to give a black powder sample C, i.e. the composite electrode material.

The test of the electrochemical properties of the composite electrode material of Example 2 is the same as that described in Example 1. As can be seen from the SEM picture of Figure 1, manganese oxide is attached around graphene and graphite oxide to form larger particulates. The supporting effect of the graphene skeleton results in improvement of the electrical conductivity of the manganese oxide material. As shown in Figure 2, the initial capacity of the composite electrode material comprising manganese oxide / graphene / graphite oxide (i.e., Sample C) for supercapacitor can reach 240 F/g, and decreases thereafter. After 100 charge-discharge cycles, the specific capacity becomes stable at 200 F/g. After 400 charge-discharge cycles, the specific capacity maintains at above 190 F/g. As shown in Figure 3, under the scanning speeds of 2 mV/s, 5 mV/s and 10 mV/s, the cyclic voltammetric curves generally show good rectangular characteristics. Under a higher scanning speed, the increase of the redox peaks is not obvious, and the rectangle characteristics are well maintained, indicating that the electrode material has a high utilization rate and a good reversibility under high scanning speeds, and suggesting good capacitance characteristics of the manganese oxide electrode material.

### Example 4

(1) 0.1 g of graphene is weighed and dispersed in 80 ml of deionized water under ultrasonic wave.
(2) A certain amount of potassium permanganate (analytically pure) is weighed and dissolved in the graphene-containing deionized water prepared in step (1) to prepare a 0.1 mol/L solution.
(3) 10 ml of polyethylene glycol is added slowing to the solution prepared in step (2) under stirring to give a mixed solution.
(4) The mixed solution is stirred until fuchsia color completely fades, and the precipitate is washed with deionized water for several times, filtered, and washed with absolute ethanol.
(5) The material is dried in an oven at 80 °C for 4 h to give a black powder sample D, i.e. the composite electrode material.

The test of the electrochemical properties of the composite electrode material of Example 2 is the same as that described in Example 1. When the amount of the added polyethylene glycol is relatively high, the initial capacity of the composite electrode material comprising manganese oxide / graphene / graphite oxide (i.e., Sample D) for supercapacitor decreases, instead, to 210 F/g. After 400 charge-discharge cycles, the specific capacity is maintained at about 190 F/g, as shown in Figure 2.

Described above are only preferred embodiments of the present invention, which are not intended to limit the present invention. Any modification, equivalent substitution and improvement made within the spirit and principle of the present invention should be included in the scope of the present invention.

## Claims

1. A composite electrode material, wherein the composite electrode material comprises manganese oxide, graphene and graphite oxide.

2. The composite electrode material according to Claim 1, **characterized in that** the weight ratio of manganese oxide is 49% ∼ 99%, the weight ratio of graphene is 0.1% - 50%, and the weight ratio of graphite oxide is 0.01% ∼ 20%.

3. A method for preparing a composite electrode material, comprising the steps of:
Step 1: sufficiently grinding graphene, and dispersing it in water under ultrasonic wave;
Step 2: dissolving a permanganate salt in the graphene-containing water to prepare an aqueous solution containing permanganate ions and graphene;
Step 3: adding polyethylene glycol to the aqueous solution prepared in Step 2 under stirring to give a mixed solution; and
Step 4: stirring the mixed solution until fuchsia color completely fades, filtering, washing and drying the precipitate, to give a composite electrode material comprising manganese oxide, graphene and graphite oxide.

4. The method for preparing a composite electrode material according to Claim 3, **characterized in that** graphene is an atomic-level graphene monomer, or an aggregate of graphite sheets consisting of 2-10 layers of atomic-level graphene monomer.

5. The method for preparing a composite electrode material according to Claim 3, **characterized in that**, in Step 2, the molar concentration of the permanganate ions in the aqueous solution is 0.08-0.12 mol/L.

6. The method for preparing a composite electrode material according to Claim 3, **characterized in that**, in Step 3, polyethylene glycol is at least one of PEG400, PEG2000 and PEG6000.

7. The method for preparing a composite electrode material according to Claim 3, **characterized in that**, in Step 3, the volume ratio of polyethylene glycol and the mixed solution is 3:40 ∼ 1:20.

8. The method for preparing a composite electrode material according to Claim 3, **characterized in that**, in Step 4, the washing process comprises washing with deionized water for 3∼5 times followed by washing with absolute ethanol for 1-3 times.

9. The method for preparing a composite electrode material according to Claim 3, **characterized in that**, in Step 4, the temperature employed in the drying process is 80 °C.

10. Use of the composite electrode material according to claim 1 as an electrode material for a supercapacitor.
